# EUROPÄISCHE PATENTSCHRIFT

(11) **EP 2 467 609 B1**
(45) Veröffentlichungstag und Bekanntmachung des Hinweises auf die Patenterteilung: **05.03.2014**
(21) Anmeldenummer: 10740544.1
(22) Anmeldetag: 28.07.2010
(51) Int. Cl.: F16D 3/60

(54) **DREHMOMENTUEBERTRAGUNGSEINRICHTUNG**
TORQUE TRANSMISSION DEVICE
DISPOSITIF DE TRANSMISSION DE COUPLE

(30) Priorität: 19.08.2009 DE 102009038039
(43) Veröffentlichungstag der Anmeldung: 27.06.2012
(73) Patentinhaber: Bayerische Motoren Werke Aktiengesellschaft, 80809 München (DE)
(72) Erfinder: DULLENKOPF, Dirk, 80807 München (DE); KORNPROBST, Wolfgang, 92345 Toeging (DE); SCHUERMANN, Helmut, 67133 Maxdorf (DE); TICHELMANN, Patrick, 85748 Garching (DE)
(86) Internationale Anmeldenummer: PCT/EP2010/004607
(87) Internationale Veröffentlichungsnummer: WO 2011/020541

(56) Entgegenhaltungen:
- EP-A1- 1 818 556
- EP-A2- 0 800 007
- WO-A1-81/01317
- DE-A1- 4 414 384
- DE-A1-102008 034 214
- GB-A- 221 981
- US-A- 4 187 699

## Beschreibung

Die vorliegende Erfindung betrifft eine Drehmomentübertragungseinrichtung gemäß dem Oberbegriff des Patentanspruches 1.

Eine derartige Drehmomentübertragungseinrichtung ist aus der DE 44 14 384 A1 bekannt. Zum relevanten Stand der Technik zählen ferner die EP 1 818 556 A1, US 4 187 699 A, WO 81/01317 A1, DE 10 2008 034 214 A1, GB 221 981 A1 sowie die EP 0800 007 A2).

Fahrzeuge mit Frontmotor und Heck- oder Allradantrieb weisen eine Gelenkwelle auf, die vom Getriebeausgang zum Eingang des Hinterachsgetriebes führt. Derartige Gelenkwellen bestehen derzeit üblicherweise aus Stahl. Sie weisen ein entsprechend hohes Gewicht auf und tragen erheblich zum Gesamtmassenträgheitsmoment des Fahrzeugs bei.

Aufgabe der Erfindung ist es, eine Drehmomentübertragungseinrichtung, insbesondere eine Gelenkwelle, für einen Antriebsstrang eines Fahrzeugs zu schaffen, die ein geringeres Gewicht als herkömmliche Gelenkwellenanordnungen aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Drehmomentübertragungseinrichtung mit einer Welle, insbesondere einer "Gelenkwelle" für einen Antriebsstrang eines Fahrzeugs, und mindestens einem Kopplungs- bzw. Flanschelement, das mit einem Ende der Welle verbunden ist. Das Kopplungs- bzw. Flanschelement ist dazu vorgesehen, die Welle mit einer anderen Komponente, wie z. B. einem Abtriebsflansch eines Fahrzeuggetriebes oder einem Antriebsflansch eines Achsgetriebes zu koppeln. Der Begriff "Welle" umfasst somit insbesondere Fahrzeugvortrieb erzeugende Wellen.

Der Kern der Erfindung besteht darin, dass sowohl die Welle als auch das mindestens eine Kopplungselement zumindest teilweise, vorzugsweise aber vollständig aus faserverstärktem Kunststoffmaterial bestehen. Bei dem Kunststoffmaterial kann es sich insbesondere um kohlefaser- und/oder glasfaserverstärkten Kunststoff handeln. Die Welle und das Kopplungselement müssen nicht notwendigerweise aus ein und demselben Kunststoffmaterial bestehen, sondern können aus unterschiedlichen Materialien hergestellt sein.

Nach einer Weiterbildung der Erfindung weist das mindestens eine Flanschelement mehrere armartige Elemente auf, die in einer Umfangsrichtung des Flanschelements gleichmäßig voneinander beabstandet sind. Das Flanschelement kann beispielsweise eine sternartige oder dreieckige Form mit drei in Umfangsrichtung jeweils um 120 Grad voneinander beabstandeten "Anschlusspunkten" handeln. An jedem der "Anschlusspunkte" kann ein Loch vorgesehen sein. Die Löcher liegen vorzugsweise auf einem gemeinsamen Lochkreis. Selbstverständlich können auch mehre als drei Anschlusspunkte, z.B. vier, fünf oder Sechs Anschlusspunkte vorgesehen sein.

Nach einer Weiterbildung der Erfindung weist das mindestens eine Flanschelement einen ringartigen Abschnitt auf, der auf die Welle bzw. auf das Wellenende aufgeschoben ist. Von dem ringartigen Abschnitt stehen die armartigen Elemente radial nach außen ab.

Nach einer Weiterbildung der Erfindung sind zwei Gruppen armartiger Elemente vorgesehen, die in einer Stirnansicht der Welle gesehen jeweils paarweise in einer Flucht liegen und die in Achsialrichtung der Welle voneinander beabstandet sind. Die beiden Gruppen armartiger Elemente können integraler Bestandteil ein und desselben Flanschelements sein, d. h. sie können mit ein und demselben ringartigen Abschnitt verbunden sein. Alternativ dazu können auch zwei separate Flanschelemente mit jeweils einer Gruppe armartiger Elemente vorgesehen sein, wobei die beiden Flanschelemente in einer Stirnansicht der Welle betrachtet so ausgerichtet sind, dass die armartigen Elemente jeweils paarweise in einer Flucht liegen.

Nach einer Weiterbildung der Erfindung bildet der ringartige Abschnitt des Flanschelements bzw. bilden die ringartigen Abschnitte der Flanschelemente mit der Welle einen Presssitz. Das Flanschelement bzw. die Flanschelemente können an ihren ringartigen Abschnitten mit der Welle zusätzlich verklebt oder in Umfangsrichtung formschlüssig verbunden sein, so dass auch hohe Drehmomente von dem Flanschelement bzw. den Flanschelementen auf die Welle bzw. umgekehrt übertragen werden können.

Zur Darstellung eines besonders festsitzenden Presssitzes kann zusätzlich eine "Umfangsbandage" vorgesehen sein, welche auf den Außenumfang des ringartigen Abschnitts des Flanschelements bzw. der ringartigen Abschnitte der Flanschelemente aufgewickelt ist. Die Umfangsbandage kann ebenfalls aus einem faserverstärkten Kunststoffmaterial hergestellt sein. Alternativ dazu kann die Umfangsbandage auch aus einem anderen Werkstoff hergestellt sein. Sie dient ganz allgemein zur Verpressung des ringartigen Abschnitts bzw. der ringartigen Abschnitte mit der Welle, was die Übertragung hoher Drehmomente ermöglicht.

Nach einer Weiterbildung der Erfindung ist jeweils ein n-ter Arm des ersten Flanschelements über ein stangen- bzw. stiftartiges Spannelement einer ersten Gruppe von Spannelementen mit einem zugeordneten n-ten Arm des zweiten Flanschelements verbunden. Die stangen- bzw. stiftartigen Spannelemente sind also parallel zur Längsrichtung der Welle angeordnet.

Nach einer Weiterbildung der Erfindung ist eine zweite Gruppe von Spannelementen vorgesehen, die ebenfalls stift- bzw. stangen- bzw. rollenartig ausgebildet sein können. Die zweite Gruppe von Spannelementen ist, wie die erste Gruppe von Spannelementen in einer Umfangsrichtung des Flanschelements bzw. der Flanschelemente gleichmäßig voneinander beabstandet, wobei, in Umfangsrichtung des mindestens einen Flanschelements gesehen, auf ein erstes Spannelement jeweils ein zweites Spannelement folgt, und umgekehrt.

Nach einer Weiterbildung der Erfindung sind Kopplungselemente vorgesehen, wobei jedes der ersten Spannelemente über mindestens ein Kopplungselement mit dem in der einen Umfangsrichtung nächsten zweiten Spannelement und über mindestens ein Kopplungselement mit dem in der entgegengesetzten Umfangsrichtung nächsten zweiten Spannelement gekoppelt ist.

Eine derartige Anordnung ist aus der älteren, nicht vorveröffentlichten Patentanmeldung der DE 10 2008 034 214.9 der Anmelderin bekannt, auf deren Inhalt hiermit vollumfänglich Bezug genommen wird. Es sei ausdrücklich darauf hingewiesen, dass der gesamte Inhalt der DE 10 2008 034 214.9 hiermit zum Gegenstand der vorliegenden Anmeldung gemacht wird. Dies ist so zu verstehen, dass sämtliche Einzelmerkmale sowie sämtliche Merkmalskombinationen, die in der DE 10 2008 034 214.9 beschrieben sind, auch mit Merkmalen der vorliegenden Patentanmeldung kombiniert werden können und bis zum Abschluss des Prüfungsverfahrens der vorliegenden Anmeldung wörtlich oder sinngemäß in die vorliegende Anmeldung übernehmbar sein sollen.

So kann vorgesehen sein, dass jedes der Kopplungselemente ein erstes Spannelement und ein in Umfangsrichtung dazu benachbartes zweites Spannelement miteinander koppelt. Die Kopplungselemente können über zugeordnete Spannelemente gespannt sein. Die Kopplungselemente können die Spannelemente zumindest über einen Teilumfang der Spannelemente umschlingen. Auf jedes der Spannelemente können mehr als zwei Kopplungselemente, insbesondere eine Vielzahl von Kopplungselementen aufgespannt sein.

Analog zu der in der DE 10 2008 034 214.9 beschriebenen Anordnung kann die erste Gruppe von Spannelementen mit der zweiten Gruppe von Spannelementen auch ausschließlich über die Kopplungselemente in Drehrichtung gekoppelt sein.

Die einzelnen Kopplungselemente können in ein elastisches, die einzelnen Kopplungselemente verbindendes Kopplungselement eingeschäumt bzw. eingegossen sein.

Ferner können die stangen- bzw. stift- bzw. rollenartigen Spannelemente an ihren Enden jeweils mit einem Absatz, einer Scheibe o. ä. versehen sein, welcher bzw. welche ein Herunterrutschen der Kopplungselemente von dem betreffenden Spannelement verhindert bzw. verhindern.

Die Kopplungselemente können ganz oder teilweise aus Glasfasermaterial bestehen. Insbesondere können die Kopplungselemente aus einem Kunststoffmaterial bestehen, das durch Fasern, insbesondere durch Glasfasern, verstärkt ist. Die Kopplungselemente können die Form ovaler Ringe bzw. Schlingen aufweisen. Die Spannelemente können schließlich eine rollen-, bolzen- bzw. buchsenartige Form aufweisen.

Im Folgenden wird die Erfindung im Zusammenhang mit der Zeichnung näher erläutert. Es zeigen:
- Figur 1: das Grundprinzip einer Drehmomentübertragungseinrichtung gemäß der Erfindung in Stirnansicht;
- Figur 2: einen Schnitt entlang der in Figur 1 gezeigten Schnittlinie A-A.

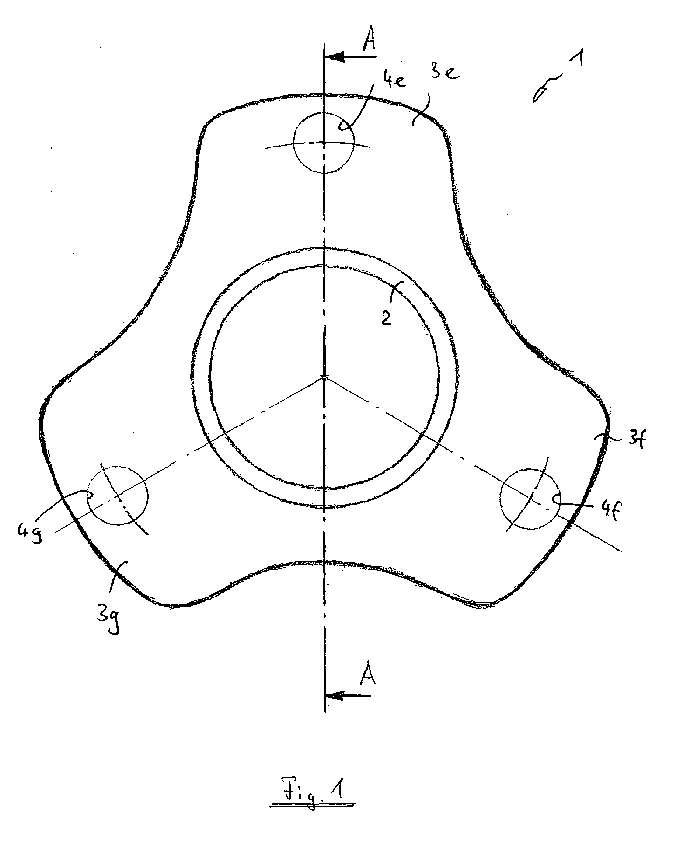

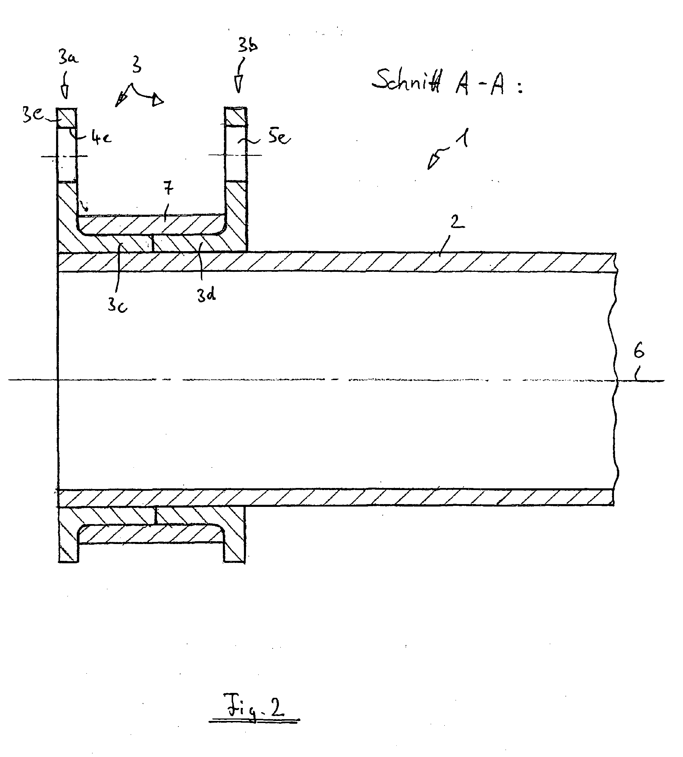

Die Figuren 1 bzw. 2 zeigen eine Drehmomentübertragungseinrichtung 1, welche eine aus faserverstärktem Kunststoffmaterial hergestellte Welle 2 sowie einen darauf aufgepressten Flansch 3 aufweist, der durch ein erstes Flanschelement 3a und ein zweites Flanschelement 3b gebildet ist.

Die beiden Flanschelemente 3a, 3b weisen jeweils einen ringartigen Abschnitt 3c, 3d auf. Die ringartigen Abschnitt 3c, 3d sind jeweils auf den Außenumfang eines Endes der Welle 2 aufgeschoben und bilden mit der Welle 2 einen Presssitz. Die Flanschelemente 3a, 3b weisen ferner drei in Umfangsrichtung jeweils um 120 Grad voneinander beabstandete armartige Elemente 3e, 3f, 3g (vgl. Figur 1) auf. In den armartigen Elementen 3e, 3f, 3g ist jeweils ein Loch bzw. eine Bohrung 4e, 4f, 4g bzw. 5e - 5g vorgesehen, wobei in den Zeichnungen lediglich die Bohrung 5e dargestellt ist.

Wie aus Figur 2 ersichtlich ist, sind die beiden Flanschelemente 3a, 3b so angeordnet, dass ihre armartigen Elemente bzw. ihre zugeordneten Bohrungen, wie z. B. die beiden Bohrungen 4e, 5e, in Axialrichtung 6 betrachtet jeweils paarweise miteinander fluchten.

Wie aus Figur 2 ersichtlich ist, ist auf den Außenumfang der ringartigen Abschnitte 3c, 3d der beiden Flanschelemente 3a, 3b eine "Umfangsbandage" 7 aufgewickelt, welche den Presssitz, den die beiden Flanschelemente 3a, 3b mit der Welle 2 bilden, verstärkt, so dass besonders hohe Drehmomente übertragen werden können. Die beiden Flanschelemente 3a, 3b bzw. ihre ringartigen Abschnitte 3c, 3d können zusätzlich mit dem Außenumfang der Welle verklebt und/oder über Formschlusselemente, wie z. B. ein Keilwellenprofil o. ä. drehgekoppelt sein.

In die einander zugeordneten Bohrungen 4e, 5e etc. der beiden Flanschelemente 3a, 3b können jeweils rollen-, bolzen- oder buchsenartige Spannelemente eingesetzt sein, ähnlich wie die Spannelemente 6, 7, 8, die in der bereits mehrfach erwähnten älteren, nicht vorveröffentlichten deutschen Patentanmeldung DE 10 2008 034 214.9 gezeigt und beschrieben sind.

Ganz analog zu der DE 10 2008 034 214.9 kann eine erste Gruppe von Spannelementen, in die Bohrungen der beiden Flanschelemente 3a, 3b eingesetzt sind, über schlingenartige bzw. schleifenartige Kopplungselemente mit einer zweiten Gruppe von Spannelementen (in der vorliegenden Patentanmeldung nicht explizit zeichnerisch dargestellt), verbunden sein. Wie bereits erwähnt, wird hinsichtlich der möglichen Anordnungen vollumfänglich auf die DE 10 2008 034 214.9 Bezug genommen.

## Patentansprüche

1. Drehmomentübertragungseinrichtung (1), mit einer Welle (2), insbesondere einer Gelenkwelle für einen Antriebsstrang eines Fahrzeugs, und mindestens einem Kopplungselement (3a, 3b), das mit einem Ende der Welle (2) verbunden ist, wobei
• das mindestens eine Kopplungselement (3a, 3b) mehrere armartige Elemente (3e, 3f, 3g) aufweist, die in einer Umfangsrichtung des mindestens einen Kopplungselements (3a, 3b) gleichmäßig voneinander beabstandet sind und
• das mindestens eine Kopplungselement (3a, 3b) einen ringartigen Abschnitt (3c, 3d) aufweist, der auf einen Außenumfang der Welle (2) aufgeschoben ist und dass die armartigen Elemente (3e, 3f, 3g) im Wesentlichen radial von dem ringartigen Abschnitt (3c, 3d) abstehen.
**dadurch gekennzeichnet, dass**
• die Welle (2) und das mindestens eine Kopplungselement (3a, 3b) jeweils ganz oder zumindest teilweise aus einem faserverstärken Kunststoffmaterial bestehen und
• ein Pressring (7) vorgesehen ist, der von außen her eine Radialkraft auf den ringartigen Abschnitt (3c, 3d) des mindestens einen Kopplungselements (3a, 3b) ausübt.

2. Drehmomentübertragungseinrichtung (1) nach Anspruch 1, **dadurch gekennzeichnet, dass** das mindestens eine Kopplungselement (3a, 3b) genau drei armartige Elemente (3e, 3f, 3g) aufweist.

3. Drehmomentübertragungseinrichtung (1) nach einem der Ansprüche 1 oder 2, **dadurch gekennzeichnet, dass** jedes der armartigen Elemente (3e, 3f, 3g) jeweils ein Loch (4e, 4f, 4g, 5e) aufweist, wobei die Löcher (4e, 4f, 4g, 5e) auf einem gemeinsamen Lochkreis liegen.

4. Drehmomentübertragungseinrichtung (1) nach einem der Ansprüche 1 bis 3, **dadurch gekennzeichnet, dass** zwei Kopplungselemente (3a, 3b) vorgesehen sind, deren ringartige Abschnitte (3c, 3d) einander zugewandt sind, wobei die armartigen Elemente (3e, 3f, 3g) der beiden Kopplungselemente (3a, 3b) in einer Axialrichtung (6) voneinander beabstandet sind und so relativ zueinander in Umfangsrichtung ausgerichtet sind, dass die einander zugeordneten Löcher (4e, 5e) fluchten.

5. Drehmomentübertragungseinrichtung (1) nach einem der Ansprüche 1 bis 4, **dadurch gekennzeichnet, dass** der Pressring (7) durch eine Umfangsbandage gebildet ist, die aus einem faserverstärkten Kunststoffmaterial hergestellt ist.

6. Drehmomentübertragungseinrichtung (1) nach einem der Ansprüche 1 bis 5, **dadurch gekennzeichnet, dass** ein n-ter Arm des ersten Kopplungselements (3a) über ein rollen-, bolzen- bzw. buchsenartiges Spannelement einer ersten Gruppe von Spannelementen mit einem zugeordneten n-ten Arm des zweiten Kopplungselements (3b) verbunden ist, wobei die Spannelemente im Wesentlichen parallel zur Längsrichtung (6) an der Welle (2) sind.

7. Drehmomentübertragungseinrichtung (1) nach Anspruch 6, **dadurch gekennzeichnet, dass** einer zweiten Gruppe von Spannelementen vorgesehen ist, die in einer Umfangsrichtung des mindestens einen Kopplungselements (3a, 3b) gleichmäßig voneinander beabstandet sind, wobei, in Umfangsrichtung des mindestens einen Kopplungselements (3a, 3b) gesehen, auf ein erstes Spannelement ein zweites Spannelement folgt, und umgekehrt.

8. Drehmomentübertragungseinrichtung (1) nach einem der Anspruch 7, **dadurch gekennzeichnet, dass** Kopplungselemente vorgesehen sind, wobei jedes der ersten Spannelemente über mindestens ein Kopplungselement mit dem in der einen Umfangsrichtung nächsten zweiten Spannelement und über mindestens ein Kopplungselement mit dem in der entgegen gesetzten Umfangsrichtung nächsten zweiten Spannelement gekoppelt ist.

9. Drehmomentübertragungseinrichtung (1) nach Anspruch 8, **dadurch gekennzeichnet, dass** jedes der Kopplungselemente ein erstes Spannelement und ein in Umfangsrichtung dazu benachbartes zweites Spannelement miteinander koppelt.

10. Drehmomentübertragungseinrichtung (1) nach einem der Ansprüche 8 oder 9, **dadurch gekennzeichnet, dass** die Kopplungselemente über zugeordnete Spannelemente gespannt sind, wobei die Kopplungselemente die Spannelemente zumindest über einen Teilumfang der Spannelemente umschlingen.

11. Drehmomentübertragungseinrichtung (1) nach einem der Ansprüche 8 bis 10 **dadurch gekennzeichnet, dass** auf jedes der Spannelemente mehr als zwei Kopplungselemente, insbesondere eine Vielzahl von Kopplungselementen aufgespannt ist.

12. Drehmomentübertragungseinrichtung (1) nach einem der Ansprüche 8 bis 11, **dadurch gekennzeichnet, dass** die erste Gruppe von Spannelementen mit der zweiten Gruppe von Spannelementen ausschließlich über die Kopplungselemente gekoppelt ist.

13. Drehmomentübertragungseinrichtung (1) nach einem der Ansprüche 8 bis 12, **dadurch gekennzeichnet, dass** die Kopplungselemente in ein elastisches, die einzelnen Kopplungselemente verbindendes Kopplungselement eingeschäumt bzw. eingegossen sind.

14. Drehmomentübertragungseinrichtung (1) nach einem der Ansprüche 8 bis 13, **dadurch gekennzeichnet, dass** im stirnseitigen Endbereich der Spannelemente jeweils ein Absatz oder eine Scheibe vorgesehen ist, welcher bzw. welche ein Herunterrutschen der Kopplungselemente von dem betreffenden Spannelement verhindert bzw. verhindern.

15. Drehmomentübertragungseinrichtung (1) nach einem der Ansprüche 8 bis 14, **dadurch gekennzeichnet, dass** die Kopplungselemente zumindest teilweise aus Glasfasern bestehen.

16. Drehmomentübertragungseinrichtung (1) nach einem der Ansprüche 8 bis 15, **dadurch gekennzeichnet, dass** die Kopplungselemente aus einem Kunststoffmaterial bestehen, das durch Fasern, insbesondere durch Glasfasern, verstärkt ist.

17. Drehmomentübertragungseinrichtung (1) nach einem der Ansprüche 8 bis 16, **dadurch gekennzeichnet, dass** die Kopplungselemente die Form ovaler Ringe bzw. Schlingen aufweisen.

18. Drehmomentübertragungseinrichtung (1) nach einem der Ansprüche 8 bis 17, **dadurch gekennzeichnet, dass** die Spannelemente eine rollen-, bolzen- bzw. buchsenartige Form aufweisen.

## Claims

1. A torque-transmitting device (1) comprising a shaft, especially a cardan shaft for a line of drive of a motor vehicle and at least one coupling element (3a, 3b) connected to one end of the shaft (2), wherein
• the at least one coupling element (3a, 3b) has a number of arm-like elements (3e, 3f, 3g) uniformly spaced apart in a peripheral direction of the at least one coupling element (3a, 3b) and
• the at least one coupling element (3a, 3b) has an annular portion (3c, 3d) slid on to an outer periphery of the shaft (2), and the arm-like elements (3e, 3f, 3g) project substantially radially from the annular portion (3c, 3d),
**characterised in that**
• the shaft (2) and the at least one coupling element (3a, 3b) consist entirely or at least partly of a fibre-reinforced plastics material and
• a wrap-around ring (7) is provided and from the exterior exerts a radial force on the annular portion (3c, 3d) of the at least one coupling element (3a, 3b).

2. A torque-transmitting device (1) according to claim 1, **characterised in that** the at least one coupling element (3a, 3b) has exactly three arm-like elements (3e, 3f, 3g).

3. A torque-transmitting device (1) according to claim 1 or claim 2, **characterised in that** each arm-like element (3e, 3f, 3g) has a hole (4e, 4f, 4g, 5e), wherein the holes (4e, 4f, 4g, 5e) lie on a common pitch circle.

4. A torque-transmitting device (1) according to any of claims 1 to 3, **characterised in that** two coupling elements (3a, 3b) are provided and have annular portions (3c, 3d) facing one another, wherein the arm-like elements (3e, 3f, 3g) of the two coupling elements (3a, 3b) are spaced apart in an axial direction (6) and are aligned relative to one another in the peripheral direction so that the associated holes (4e, 5e) are in line.

5. A torque-transmitting device (1) according to any of claims 1 to 4, **characterised in that** the wrap-around ring (7) is in the form of a peripheral band made of a fibre-reinforced plastics material.

6. A torque-transmitting device (1) according to any of claims 1 to 5, **characterised in that** an n^{th} arm of the first coupling element (3a) is connected to an associated n^{th} arm of the second coupling element (3b) via a roll, bolt or bush-like tensioning element in a first group of tensioning elements, wherein the tensioning elements are substantially parallel to the longitudinal direction (6) on the shaft (2).

7. A torque-transmitting device (1) according to claim 6, **characterised in that** a second group of tensioning elements are provided and are uniformly spaced from one another in a peripheral direction of the at least one coupling element (3a, 3b), wherein, considered in the peripheral direction of the at least one coupling element (3a, 3b), a second tensioning element follows a first tensioning element and vice versa.

8. A torque-transmitting device (1) according to claim 7, **characterised in that** coupling elements are provided, wherein each first tensioning element is coupled by at least one coupling element to the next second tensioning element in one peripheral direction and via at least one coupling element to the next second tensioning element in the opposite peripheral direction.

9. A torque-transmitting device (1) according to claim 8, **characterised in that** each coupling element couples a first tensioning element to a neighbouring second tensioning element in the peripheral direction.

10. A torque-transmitting device (1) according to claim 8 or claim 9, **characterised in that** the coupling elements are tensioned by associated tensioning elements, wherein the coupling elements surround the tensioning elements over at least a part of their circumference.

11. A torque-transmitting device (1) according to any of claims 8 to 10, **characterised in that** more than two coupling elements, especially a number of coupling elements, are tensioned on each tensioning element.

12. A torque-transmitting device (1) according to any of claims 8 to 11, **characterised in that** the first group of tensioning elements is coupled to the second group of tensioning elements exclusively via the coupling elements.

13. A torque-transmitting device (1) according to any of claims 8 to 12, **characterised in that** the coupling elements are foamed or poured into an elastic coupling element connecting the individual coupling elements.

14. A torque-transmitting device (1) according to any of claims 8 to 13, **characterised in that** a shoulder or disc is provided in an end region of each clamping element, and prevents the coupling elements slipping down from the respective tensioning element.

15. A torque-transmitting device (1) according to any of claims 8 to 14, **characterised in that** the coupling elements consist at least partly of glass fibres.

16. A torque-transmitting device (1) according to any of claims 8 to 15, **characterised in that** the coupling elements are made of a plastics material reinforced by fibres, especially glass fibres.

17. A torque-transmitting device (1) according to any of claims 8 to 16, **characterised in that** the coupling elements are in the shape of oval rings or loops.

18. A torque-transmitting device (1) according to any of claims 8 to 17, **characterised in that** the tensioning elements are in the shape of rolls, pins or bushes.

## Revendications

1. Dispositif de transmission de couple (1) comportant un arbre (2), en particulier un arbre articulé pour la ligne d'entrainement d'un véhicule, ainsi qu'au moins un élément d'accouplement (3a, 3b) qui est relié à une extrémité de l'arbre (2), dans lequel :
l'élément d'accouplement (3a, 3b) comporte plusieurs éléments en forme de bras (3e, 3f, 3g) qui sont régulièrement espacés les uns des autres dans la direction périphérique de l'élément d'accouplement (3a, 3b), et
l'élément d'accouplement (3a, 3b) comporte un segment annulaire (3c, 3d) qui est inséré sur la périphérie externe de l'arbre (2), et les éléments en forme de bras (3e, 3f, 3g) s'écartent essentiellement radialement de ce segment annulaire (3c, 3d),
**caractérisé en ce que**
l'arbre (2) et l'élément d'accouplement (3a, 3b) sont respectivement réalisés en totalité ou au moins partiellement en un matériau synthétique renforcé par des fibres, et
il est prévu une bague de serrage (7) qui exerce à partir de l'extérieur une force radiale sur le segment annulaire (3c, 3d) de l'élément d'accouplement (3a, 3b).

2. Dispositif de transmission de couple (1) conforme à la revendication 1,
**caractérisé en ce que**
l'élément d'accouplement (3a, 3b) comporte exactement trois éléments en forme de bras (3e, 3f, 3g).

3. Dispositif de transmission de couple (1) conforme à l'une des revendications 1 ou 2,
**caractérisé en ce que**
chacun des élément en forme de bras (3e, 3f, 3g) comporte un perçage respectif (4e, 4f, 4g, 5e), ces perçages (4e, 4f, 4g, 5e) étant situés sur un cercle commun.

4. Dispositif de transmission de couple (1) conforme à l'une des revendications 1 à 3,
**caractérisé en ce qu'**
il est prévu deux éléments d'accouplement (3a, 3b) dont les segments annulaires (3c, 3d) sont tournés l'un vers l'autre, les éléments en forme de bras (3e, 3f, 3g) des deux éléments d'accouplement (3a, 3b) étant écartés l'un de l'autre en direction axiale (6) et orientés relativement l'un à l'autre en direction périphérique de sorte que les perçages (4e, 5e) associés soient alignés.

5. Dispositif de transmission de couple (1) conforme à l'une des revendications 1 à 4,
**caractérisé en ce que**
la bague de serrage (7) est formée par un bandage périphérique qui est réalisé en un matériau synthétique renforcé par des fibres.

6. Dispositif de transmission de couple (1) conforme à l'une des revendications 1 à 5,
**caractérisé en ce qu'**
un énième bras du premier élément d'accouplement (3a) est relié à un énième bras associé du second élément d'accouplement (3b) par un élément de serrage d'un premier groupe d'éléments de serrage réalisé en forme de rouleau, de tourillon ou de douille, les éléments de serrage étant montés essentiellement parallèlement à la direction longitudinale (6) sur l'arbre (2).

7. Dispositif de transmission de couple (1) conforme à la revendication 6,
**caractérisé en ce qu'**
il est prévu un second groupe d'éléments de serrage qui sont uniformément écartés les uns des autres dans la direction périphérique de l'élément d'accouplement (3a, 3b), dans la direction périphérique de l'élément d'accouplement (3a, 3b), un second élément de serrage suivant un premier élément de serrage et inversement.

8. Dispositif de transmission de couple (1) conforme à la revendication 7,
**caractérisé en ce que**
des éléments d'accouplement sont prévus, chacun des premiers éléments de serrage étant accouplé par au moins un élément d'accouplement avec le second élément de serrage suivant dans une direction périphérique, et par au moins un élément d'accouplement avec le second élément de serrage suivant dans la direction périphérique inverse.

9. Dispositif de transmission de couple (1) conforme à la revendication 8,
**caractérisé en ce que**
chacun des éléments d'accouplement effectue l'accouplement d'un premier élément de serrage et d'un second élément de serrage voisin de celui-ci en direction périphérique.

10. Dispositif de transmission de couple (1) conforme à l'une des revendications 8 et 9,
**caractérisé en ce que**
les éléments d'accouplement sont serrés par l'intermédiaire d'éléments de serrage associés, les éléments d'accouplement entourant les éléments de serrage au moins sur une partie de la périphérie de ces éléments de serrage.

11. Dispositif de transmission de couple (1) conforme à l'une des revendications 8 et 10,
**caractérisé en ce que**
sur chacun des éléments de serrage sont serrés plus de deux éléments d'accouplement, en particulier plusieurs éléments d'accouplement.

12. Dispositif de transmission de couple (1) conforme à l'une des revendications 8 à 11,
**caractérisé en ce que**
le premier groupe d'éléments de serrage est accouplé au second groupe d'éléments de serrage exclusivement par l'intermédiaire des éléments d'accouplement.

13. Dispositif de transmission de couple (1) conforme à l'une des revendications 8 à 12,
**caractérisé en ce que**
les éléments d'accouplement sont insérés dans de la mousse ou noyés dans un élément d'accouplement élastique reliant les différents éléments d'accouplement.

14. Dispositif de transmission de couple (1) conforme à l'une des revendications 8 à 13,
**caractérisé en ce que**
dans la zone d'extrémité frontale des éléments de serrage est respectivement prévu un épaulement ou un disque qui empêche une séparation par glissement des éléments d'accouplement de l'élément de serrage correspondant.

15. Dispositif de transmission de couple (1) conforme à l'une des revendications 8 ou 14,
**caractérisé en ce que**
les éléments d'accouplement sont réalisés au moins partiellement en fibres de verre.

16. Dispositif de transmission de couple (1) conforme à l'une des revendications 8 à 15,
**caractérisé en ce que**
les éléments d'accouplement sont réalisés en un matériau synthétique qui est renforcé par des fibres, en particulier par des fibres de verre.

17. Dispositif de transmission de couple (1) conforme à l'une des revendications 8 à 16,
**caractérisé en ce que**
les éléments d'accouplement sont réalisés sous la forme de bagues ovales ou de boucles.

18. Dispositif de transmission de couple (1) conforme à l'une des revendications 8 à 17,
**caractérisé en ce que**
les éléments de serrage ont la forme de rouleaux de tourillons ou de douilles.
